# EUROPEAN PATENT SPECIFICATION

(11) **EP 3 820 674 B1**
(45) Date of publication and mention of the grant of the patent: **22.11.2023**
(21) Application number: 19869600.7
(22) Date of filing: 27.09.2019
(51) Int. Cl.: B29C 64/118, B29C 64/245, B22F 10/47, B33Y 10/00, B33Y 30/00, B29C 64/357, B29C 64/40, B22F 10/18, B22F 10/43, B22F 10/73, B29C 64/165

(54) **PRODUCTION METHOD WITH MOLTEN FILAMENTS ON A POWDER BED**
VERFAHREN ZUR HERSTELLUNG VON GESCHMOLZENEN FILAMENTEN AUF EINEM PULVERBETT
PROCÉDÉ DE PRODUCTION AVEC DES FILAMENTS FONDUS SUR UN LIT DE POUDRE

(30) Priority: 01.10.2018 TR 201814270
(43) Date of publication of application: 19.05.2021
(73) Proprietor: ORTA DOGU TEKNIK UNIVERSITESI, 06800 Ankara (TR)
(72) Inventor: DÖLEN, Melik, Ankara (TR); YAMAN, Ula, Çankaya/Ankara (TR); GHAREHPAPAGH, Bahar, Çankaya/Ankara (TR); D LBERO LU, Mecid U ur, Tuzla/ stanbul (TR)
(74) Representative: Yalçiner Patent and Consulting Ltd.
(86) International application number: PCT/TR2019/050801
(87) International publication number: WO 2020/072018

(56) References cited:
- WO-A1-2017/009190
- WO-A1-2017/040188
- DE-A1-102013 215 748
- US-A1- 2015 273 582
- US-A1- 2016 082 662
- US-A1- 2017 123 237
- US-A1- 2018 154 439

## Description

### Technical Field of the Invention

The invention subject to the application is related to a method of establishing support structures used in additive manufacturing methods based on the material layering with extrusion principle with 3D printers, wherein said method is characterized in that the additive manufacturing carried out by material layering with extrusion is performed in a recyclable particle tank (powder, dust, particle etc.).

### Known State of the Art (Prior Art)

For the 3D printers operating with the material layering via extrusion technique of the prior art, it has been necessary to use support structures due to the limitations arising during production.

In such printers, support structures are formed using different methods and these structures are then separated from the actual part after manufacturing.

For example, such support structures are made of the same material as the manufactured part and are produced with a design that makes separation easier and after manufacturing is completed the support structure is separated from the actual part by the user, using bladed articles.

In another method, support structures made of a different material that are water soluble are used, and by this means following production, the actual part is immersed in water and it is enabled for the support structure to be dissolved.

The technical problems arising from these support structures of the prior art can be described as follows. The support structures that are separated by being cut off from the actual part after being manufactured as a monolithic structure, are disposed after production, thereby increasing production costs. Together with this, as the support structure needs to be separated from the actual part by cutting, severe deformations occur on the surface quality of the actual part.

If we take into consideration, support structures that have been produced with a different material than the actual part which are water soluble for example, the product material costs of the support structure is higher than the actual product material costs, and as these support structures are dissolved in water and thrown away, they are considered as loss and they highly increase manufacturing costs.

The document US 2015/273582 A1 discloses a system for printing a three-dimensional part; the system comprises a media hopper configured to provide a supply of a magnetic support media, one or more print heads that are configured to print layers of the three-dimensional part in a build chamber, a transfer mechanism configured to transfer layers of a magnetic support media from the media hopper into the build chamber and a plurality of magnets configured to generate a magnetic field in the build chamber. The one or more print heads can comprise one or more extrusion heads.

### Brief Description of the Invention and its Aims

A production method which enables to overcome the technical problems of the methods of the prior art and the problems mentioned above has been aimed to be developed by the present invention.

The additive manufacturing process based on material layering with extrusion principle in the production method of the invention, or in other words the 3-dimensional printing process is carried out inside a particle tank. The contents of said particle tank constitute fine sand powders or other similar materials.

By means of this method, the particles that are used as support structures can be re-used and by this means manufacturing costs can be reduced. Additionally, said materials are completely from natural sources and therefore they are not harmful to human health or the environment.

Moreover, as production is to be carried out inside the particles, the hot molten material which enables production of the actual part shall be able to cool down in a controlled manner. The homogenous cooling environment, ensures the structure of the actual part to be more durable and the surface quality to be enhanced.

Together with this, by means of the method subject to the invention, application ease is provided during the production of especially lattice structures with remarkable voids. However, the workpiece that can be produced needs to have at least one material discharge hole.

### Definition of the Figures Describing the Invention

The figures and related descriptions that are used in order to further describe the production method developed by this invention have been provided below.

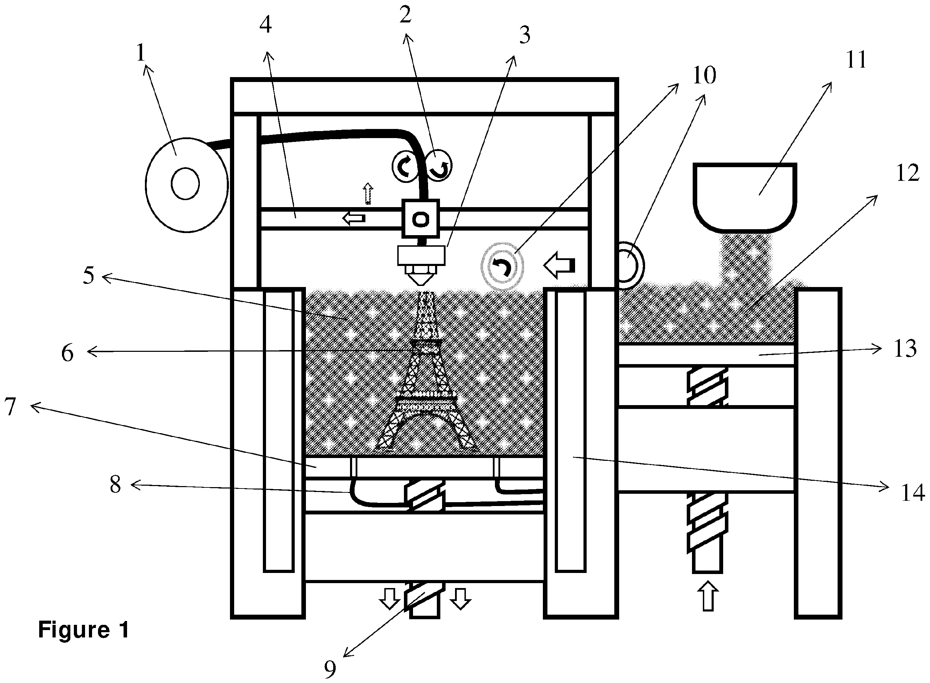

**Figure 1****:** Sectional view of the printing system used in the manufacturing method subject of the invention.

### Definitions of the aspects/ sections/ parts forming the invention

The parts and sections in the figures that are used in order to further describe the manufacturing method developed by this invention have each been numbered and the references of each number have been provided below.
**1.** Printing Material
**2.** Printing Material Supply Apparatus
**3.** Extruder
**4.** X and Y Movement axis
**5.** Particle Tank
**6.** Workpiece
**7.** Perforated printing plate
**8.** Support Material Re-feeding Apparatus
**9.** Z Movement Axis
**10.** Spreading Apparatus
**11.** Support Material Chamber
**12.** Support Material
**13.** Support Material Supply Mechanism
**14.** Electronically Controlled Particle Adjuster

### Detailed Description of Invention

With respect to the invention described as the molten filament manufacturing method on a powder bed, the workpiece (6) is shaped by feeding the filament printing material (1) through an extruder (3) having a certain temperature, in order to melt material, via a printing material supply apparatus (2).

This process that has been developed based on the additive manufacturing principles, enables to produce the desired workpiece by forming a bunch of molten material layers by being adhered to a special collapsible perforated printing plate (7) with the addition of materials on top of each other and by cooling of the layers.

The mentioned shaping process can be carried out by using X and Y movement axis (4) on each layer and the processes performed on these sequential layers can be enabled by using the Z movement axis (9).

The support material (12) such as powder, sand, particles etc. that have crucial importance in the invention, are spread on layers each having different heights, thereby enabling flawless production based on using a workpiece (6).

The spreading process is carried out by means of the process steps mentioned below;
- A predefined amount of support material (12) is poured into a particle tank (5) comprising the workpiece (6) using a support material chamber (11) and a support material supply mechanism (13),
- The support material (12) that has been poured is compressed by a spreading apparatus (10) and is flattened,
- The rigidity of the support material is adjusted
   ∘ by using a suitable binder/volatile substances or
   ∘ by using ferromagnetic material and magnetic field interaction or
   ∘ by using electrostatic loaded particles
in order to ensure the integrity of the support material (12) to remain intact, inside the particle tank (5) using an electronically controlled particle adjuster (14).

The above-mentioned molten material shaping process, the support material spreading and solidifying process are repeated for each layer adjusted with Z movement axis (9) and thereby the workpiece can be produced.

Following the production process, the support material (12) located inside the particle tank (5) is re-supplied and can be re-used. The process is carried out by re-transferring the support material (12) back into the support material chamber (11) or the support material supply mechanism (13). At this stage, the perforated printing plate (7) having a collapsible feature and the support material re-supply apparatus (8) are used. Following this, the workpiece (6) that remains unsupported in the particle tank (5) is lifted to a suitable height using Z movement axis (9) and it is then scraped off from the print plate (7).

## Claims

1. Production method with molten filament printing material (1) on a powder bed carried out based on additive manufacturing principles, comprising the following steps; in order to ensure flawless production based on a workpiece (6), and in order to produce the workpiece desired, molten material layers forming a stack after being layered on top of each other and being adhered on a special collapsible perforated print plate (7), are formed by spreading support material (12) such as powder, sand, particles etc. on layers each having different heights, to shape the filament printing material (1) by feeding material through an extruder (3) having a certain temperature via a printing material supply apparatus (2) and thereafter the molten material layers are cooled,
• A predefined amount of the support material (12) is poured into a particle tank (5) comprising the workpiece (6) using a support material chamber (11) and a support material supply mechanism (13),
• The support material (12) that has been poured is compressed by a spreading apparatus (10) and is flattened,
• The rigidity of the support material is adjusted
∘ by using a suitable binder/volatile substances or
∘ by using ferromagnetic material and magnetic field interaction or
∘ by using electrostatic loaded particles
in order to ensure the integrity of the support material (12) to remain intact, inside the particle tank (5) using an electronically controlled particle adjuster (14), and
• the support material (12) located inside the particle tank (5) is re-supplied via the collapsible perforated printing plate (7) and a support material re-supply mechanism (8) in order to be re-used.

2. Production method with molten filaments on a powder bed according to claim 1, **characterized in that** the shaping process is carried out using X and Y movement axes (4) on each layer.

3. Production method with molten filaments on a powder bed according to claim 1, **characterized in that** the shaping process is carried out using the Z movement axis (9) on layers having different heights.

4. Production method with molten filaments on a powder bed according to claim 1, **characterized in that** the shaping process and the support material spreading and solidifying processes, are repeated for each layer adjusted with Z movement axis (9) to produce the work piece.

## Patentansprüche

1. Herstellungsverfahren mit geschmolzenem Filament-Druckmaterial (1) auf einem Pulverbett, welches basiert auf die additiven Fertigungsprinzipien durchgeführt wird, umfasst diese Schritte; zum Vorsehen der einwandfreien Produktion basiert auf ein Werkstück (6) und zum Herstellen des gewünschten Werkstücks werden die geschmolzenen Materialschichten, die einen Stapel bilden, nachdem sie übereinander geschichtet worden sind und auf einer besonderen zusammenklappbaren perforierten Druckplatte (7) geklebt worden sind, durch Verbreiten des Stützmaterials (12) wie Pulver, Sand, Partikel usw. auf den Schichten mit jeweils verschiedenen Höhen gebildet, um das Filament-Druckmaterial (1) durch das Aufgabematerial anhand eines Extruders (3) mit einer bestimmten Temperatur mittels der Versorgungsvorrichtung für das Druckmaterial (2) zu formen, und anschließend werden die geschmolzenen Materialschichten gekühlt,
• Eine vordefinierte Menge an Stützmaterial (12) wird unter Verwendung einer Stützmaterialkammer (11) und eines Versorgungsmechanismus für Stützmaterial (13) in den Partikel-Behälter (5) geschüttet, der das Werkstück (6) umfasst,
• Das geschüttete Stützmaterial (12) wird mittels einer Streuvorrichtung (10) gepresst und abgeflacht,
• Die Steifigkeit des Stützmaterial wird wie folgt eingestellt
∘ durch Verwenden der geeigneten Bindemittel/flüchtigen Substanzen oder
∘ durch Verwenden des ferromagnetischen Materials oder der Magnetfeld-Interaktion oder
∘ durch Verwenden der elektrostatisch aufgeladenen Partikel
wobei wird beabsichtigt, die Integrität des Stützmaterials (12) unter Verwendung eines elektronisch gesteuerten Partikeleinstellers (14) innerhalb des Partikel-Behälters (5) erhalten zu bleiben, und
• das sich im Partikel-Behälter (5) befindende Stützmaterial (12) wird zur Wiederverwendung durch die zusammenklappbare perforierte Druckplatte (7) und den Stützmaterial-Nachversorgungsmechanismus (8) nachgeliefert.

2. Herstellungsverfahren mit den geschmolzenen Filamenten auf dem Pulverbett nach Anspruch 1, **dadurch gekennzeichnet, dass** der Formgebungsprozess unter Verwendung der X- und Y-Bewegungsachsen (4) auf jeder Schicht durchgeführt wird.

3. Herstellungsverfahren mit den geschmolzenen Filamenten auf dem Pulverbett nach Anspruch 1, **dadurch gekennzeichnet, dass** der Formgebungsprozess unter Verwendung der Z-Bewegungsachse (9) auf den Schichten mit verschiedener Höhe durchgeführt wird.

4. Herstellungsverfahren mit den geschmolzenen Filamenten auf dem Pulverbett nach Anspruch 1, **dadurch gekennzeichnet, dass** der Formgebungsprozess und die Streu- und Verfestigungsprozesse für das Stützmaterial für jede Schicht durch Einstellen mit der Z-Bewegungsachse (9) wiederholt werden, um das Werkstück herzustellen.

## Revendications

1. Méthode de production avec un matériau d'impression à filament fondu (1) sur un lit de poudre effectuée sur la base des principes de fabrication additive, comprenant les étapes suivantes ; afin d'assurer une production sans faille sur la base d'une pièce à usiner (6), et afin de produire la pièce à usiner souhaitée, des couches de matériau fondu formant une pile après avoir été stratifiées l'une sur l'autre et collées sur une plaque d'impression perforée pliable spéciale (7), sont formées en étalant un matériau de support (12) tel que de la poudre, du sable, des particules, etc. sur des couches ayant chacune des hauteurs différentes, pour façonner le matériau d'impression à filament (1) en alimentant le matériau à travers une extrudeuse (3) ayant une certaine température via un appareil d'alimentation en matériau d'impression (2), et ensuite les couches de matériau fondu sont refroidies,
• Une quantité prédéfinie du matériau de support (12) est versée dans un réservoir de particules (5) comprenant la pièce à usiner (6) en utilisant une chambre de matériau de support (11) et un mécanisme d'alimentation en matériau de support (13),
• Le matériau de support (12) qui a été coulé est comprimé par un appareil d'étalement (10) et est aplati,
• La rigidité du matériau de support est ajustée
∘ en utilisant un liant approprié/des substances volatiles ou
∘ en utilisant un matériau ferromagnétique et l'interaction du champ magnétique ou
∘ en utilisant des particules chargées électrostatiquement
afin d'assurer l'intégrité du matériau de support (12) de rester intact, à l'intérieur du réservoir de particules (5) en utilisant un ajusteur de particules (14) contrôlé électroniquement, et
• le matériau de support (12) situé à l'intérieur du réservoir de particules (5) est réalimenté via la plaque d'impression perforée pliable (7) et un mécanisme de réalimentation en matériau de support (8) afin d'être réutilisé.

2. Méthode de production avec des filaments fondus sur un lit de poudre selon la revendication 1, **caractérisée en ce que** le processus de mise en forme est effectué en utilisant les axes (4) de déplacement X et Y sur chaque couche.

3. Méthode de production avec des filaments fondus sur un lit de poudre selon la revendication 1, **caractérisée en ce que** le processus de mise en forme est effectué en utilisant l'axe (9) de mouvement Z sur des couches de différentes hauteurs.

4. Méthode de production avec des filaments fondus sur un lit de poudre selon la revendication 1, **caractérisée en ce que** le processus de mise en forme et les processus d'étalement et de solidification du matériau de support, sont répétés pour chaque couche ajustée avec l'axe (9) de déplacement Z afin de produire la pièce à usiner.
